(19) Europäisches Patentamt / European Patent Office / Office européen des brevets

(11) **EP 4 453 650 B1**

(12) **FASCICULE DE BREVET EUROPEEN**

(45) Date de publication et mention
de la délivrance du brevet:
**29.10.2025 Bulletin 2025/44**

(21) Numéro de dépôt: **22835083.1**

(22) Date de dépôt: **16.12.2022**

(51) Classification Internationale des Brevets (IPC):
***G02F 1/35*** *(2006.01)*

(52) Classification Coopérative des Brevets (CPC):
**G02F 1/3501;** G02F 2201/126; G02F 2203/10

(86) Numéro de dépôt international:
**PCT/EP2022/086471**

(87) Numéro de publication internationale:
**WO 2023/117799 (29.06.2023 Gazette 2023/26)**

(54) **PROCEDE ET APPAREIL DE GENERATION D'IMPULSIONS ELECTROMAGNETIQUES ULTRABREVES ISOLEES**

VERFAHREN UND VORRICHTUNG ZUR ERZEUGUNG ISOLIERTER ULTRAKURZER ELEKTROMAGNETISCHER IMPULSE

METHOD AND DEVICE FOR GENERATING ISOLATED ULTRASHORT ELECTROMAGNETIC PULSES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.12.2021 FR 2114379**

(43) Date de publication de la demande:
**30.10.2024 Bulletin 2024/44**

(73) Titulaires:
• **Commissariat à l'Energie Atomique et aux Energies Alternatives**
**75015 Paris (FR)**
• **Centre National de la Recherche Scientifique**
**75016 Paris (FR)**
• **Ecole Polytechnique**
**91128 Palaiseau Cedex (FR)**
• **École Nationale Supérieure de Techniques Avancées**
**91762 Palaiseau Cédex (FR)**

(72) Inventeurs:
• **VINCENTI, Henri**
**91191 GIF SUR YVETTE (FR)**
• **LEBLANC, Adrien**
**91762 PALAISEAU Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **TARASEVITCH A P ET AL: "Towards intense attosecond pulses: using two beams for high order harmonic generation from solid targets; Towards intense attosecond pulses: two beam HOHG", JOURNAL OF PHYSICS B, ATOMIC MOLECULAR AND OPTICAL PHYSICS, INSTITUTE OF PHYSICS PUBLISHING, BRISTOL, GB, vol. 42, no. 13, 14 July 2009 (2009-07-14), pages 134006, XP020159956, ISSN: 0953-4075**
• **LUDOVIC CHOPINEAU ET AL: "Sub-laser-cycle control of relativistic plasma mirrors", ARXIV.ORG, CORNELL UNIVERSITY LIBRARY, 201 OLIN LIBRARY CORNELL UNIVERSITY ITHACA, NY 14853, 29 July 2021 (2021-07-29), XP091018965**
• **FREDERIK B\"OHLE ET AL: "Generation of XUV spectral continua from relativistic plasma mirrors driven in the near-single-cycle limit", ARXIV.ORG, CORNELL UNIVERSITY LIBRARY, 201 OLIN LIBRARY CORNELL UNIVERSITY ITHACA, NY 14853, 10 March 2020 (2020-03-10), XP081618434**

EP 4 453 650 B1

- ZA\"IM ET AL: "Interaction of ultraintense radially-polarized laser pulses with plasma mirrors", ARXIV.ORG, CORNELL UNIVERSITY LIBRARY, 201 OLIN LIBRARY CORNELL UNIVERSITY ITHACA, NY 14853, 7 April 2020 (2020-04-07), XP081639931
- THAURY C ET AL: "PhD TUTORIAL; High-order harmonic and attosecond pulse generation on plasma mirrors: basic mechanisms; Tutorial", JOURNAL OF PHYSICS B, ATOMIC MOLECULAR AND OPTICAL PHYSICS, INSTITUTE OF PHYSICS PUBLISHING, BRISTOL, GB, vol. 43, no. 21, 14 November 2010 (2010-11-14), pages 213001, XP020181077, ISSN: 0953-4075
- ORFANOS I ET AL: "Attosecond pulse metrology", APL PHOTONICS, AMERICAN INSTITUTE OF PHYSICS, 2 HUNTINGTON QUADRANGLE, MELVILLE, NY 11747, vol. 4, no. 8, 26 August 2019 (2019-08-26), XP012240222, DOI: 10.1063/1.5086773

## Description

L'invention concerne un procédé et un appareil pour la génération d'impulsions électromagnétiques cohérentes ultrabrèves et isolées de haute énergie. Elle concerne notamment, mais pas exclusivement, la génération d'impulsions de durée sub-picoseconde ($1ps=10^{-12}s$), sub-femtoseconde ($1fs=10^{-15}$ s) ou « attoseconde » ($1as=10^{-18}$ s) et une énergie typiquement comprise entre 1 mJ et 1 J. De telles impulsions se prêtent à de nombreuses applications, de la lithographie dans l'ultraviolet profond (DUV, pour « deep UV » en anglais) ou l'ultraviolet extrême (XUV ou EUV : 10 - 200 nm), utilisée pour la fabrication de circuits intégrés, à la recherche fondamentale (étude de processus ultra-rapides dans la matière etc.) et à la chirurgie de l'œil.

A ce jour, plusieurs technologies permettent de générer des impulsions électromagnétiques dont le spectre s'étend en tout ou en partie dans le domaine du DUV (200nm - 400nm), de l'ultraviolet extrême voire dans les rayons X (longueur d'onde inférieure à 10 nm).

Les lasers à excimer utilisent un gaz de molécules dans une cavité qui est pompée par décharge électrique. La décharge excite les molécules, qui en se désexcitant émettent une radiation cohérente dans l'ultraviolet. Selon le gaz utilisé dans la cavité, des rayonnements UV allant de 351nm (XeF) à 157nm ($F_2$) peuvent être produits. Les lasers à excimer produisent aujourd'hui des impulsions nanosecondes avec un taux de répétition de l'ordre du kHz avec une énergie par impulsion de 1 mJ à 100mJ (correspondant à des puissances moyennes de 1 W à 100W environ). Leur efficacité énergétique est de l'ordre de 0.3%. Cette technologie est très utilisée en lithographie DUV. Son inconvénient principal est que la longueur d'onde minimale atteignable reste relativement élevée (157 nm), limitant ainsi la taille minimale des gravures réalisables. En outre, elle ne permet pas d'obtenir des impulsions ultrabrèves, c'est-à-dire de durée (largeur complète à mi-hauteur) inférieure - et souvent très inférieure - à 100 ps, voire à 100 fs.

Les plasmas chauds (-6000 K) créés en focalisant un laser intense (typiquement à $CO_2$) sur de la matière émettent un rayonnement thermique qui étend jusqu'à l'ultraviolet extrême. Ces sources permettent d'atteindre des longueurs d'onde très courtes, de l'ordre de 10 nm, avec une puissance moyenne de l'ordre de 100 W et une efficacité de conversion énergétique d'environ 0.3%. Cette technologie est très utilisée en lithographie EUV, notamment pour la gravure à 13,5 nm. Cependant elle présente des inconvénients majeurs : la lumière engendrée est incohérente et donc difficile à manipuler, le plasma chaud émet aussi des particules énergétiques (électrons et ions) qui endommagent les optiques EUV, la technologie est très coûteuse et très consommatrice d'énergie. En outre, elle ne permet pas d'obtenir des impulsions cohérentes ultrabrèves.

Les lasers à électrons libres (FEL, de l'anglais « Free Electrons Lasers) utilisent un accélérateur linéaire pour accélérer des paquets d'électrons à de hautes énergies (100 MeV - plusieurs dizaines de GeV) et les faire osciller dans un onduleur composé d'une série d'aimants (ou de bobines) qui délivrent un fort champ magnétique. Ce mouvement oscillant produit un rayonnement synchrotron dans l'UV, EUV, et l'X qui est amplifié par couplage onde-électrons (effet laser). Ces lasers produisent des impulsions cohérentes, ultrabrèves (quelques femtosecondes), d'énergie relativement haute (quelques dizaines de $\mu J$). Les principaux inconvénients des FELs sont leur coût extrêmement élevé et leur rendement modeste, ce qui les cantonne à la recherche fondamentale. En outre, ils ne permettent pas d'obtenir des impulsions de durée attoseconde (on entend par « impulsions attosecondes » des impulsions de durée inférieure à 1 fs).

La génération d'harmoniques d'ordre élevé dans les gaz (HHG, de l'anglais « High-order Harmonic Generation) est une technique qui consiste à focaliser des impulsions laser femtosecondes, généralement dans le proche infrarouge, d'intensité relativement élevée (typiquement $\sim 10^{15}$ W/cm$^2$) dans un gaz pour obtenir l'émission d'un rayonnement harmonique du laser, avec des ordres d'harmonique pouvant atteindre plusieurs dizaines. Dans le domaine temporel, le rayonnement harmonique se présente sous la forme de trains d'impulsions attosecondes, mais dans certains cas il est possible d'obtenir des impulsions attosecondes isolées. Les efficacités typiques obtenues (infrarouge vers UV à EUV) sont de l'ordre de $10^{-5}$ à $10^{-6}$ sur la gamme 10eV à 100eV (i.e. 120 nm à 12nm). Aujourd'hui, ce type de source est réalisé avec des lasers infrarouges et proches infrarouges de quelques mJ à quelques dizaines de mJ, ce qui permet d'atteindre au mieux des impulsions

UV/EUV d'une dizaine de $\mu J$ d'énergie. Ce type de source de lumière EUV est relativement peu coûteux, mais reste surtout utilisé dans des expériences de physique fondamentale résolues en temps. Les performances au niveau énergétique de ces installations sont très faibles, ce qui les rend peu adaptées à des applications industrielles.

D'autres techniques, exploitant la réflexion d'impulsions laser sur des plasmas denses (« miroirs plasma ») sont moins mûres.

La technique de génération d'harmoniques sur miroir plasma relativiste - voir par exemple (Vincenti 2019 ou FREDERIK B\"OHLE ET AL: "Generation of XUV spectral continua from relativistic plasma mirrors driven in the near-single-cycle limit" 2020) - consiste à focaliser un laser infrarouge ou proche infrarouge femtoseconde intense, à haut contraste temporel et de puissance de quelques dizaines de TW à quelques dizaines de PW pour atteindre des intensités lasers I>$10^{18}$W/cm$^2$ sur une cible initialement solide. Au point focal, le laser ionise complètement la cible et forme un plasma dense, qui est réfléchissant pour le champ incident. Sous l'effet de ce champ le « miroir plasma » ainsi formé oscille à des vitesses relativistes à la période laser. Ces oscillations entrainent une compression temporelle périodique du champ incident qui correspond, dans le domaine des fréquences, à un spectre d'harmoniques Doppler d'ordre élevé de la fréquence laser, pouvant s'étendre jusqu'à l'EUV voire aux rayons X, et dans le domaine temporel à un train d'impulsions attosecondes. Les efficacités de conversion obtenues dépendent fortement des conditions laser (intensité, angle d'incidence) et plasmas (densité, longueur de l'interface vide plasma). Dans des conditions optimisées et pour des lasers de classe 100TW (-2J-20fs, intensité max de l'ordre de $10^{19}$W/cm$^2$), les efficacités de conversion sont inférieures à $10^{-4}$ en dessous de 80nm (soit des énergies de l'ordre de 100$\mu$J). Pour des lasers de classe multi-PW (100J-20fs, intensités I>$10^{20}$W/cm2), ces efficacités de conversion sont de l'ordre de 0.5% à 80nm (soit des énergies de l'ordre du joule). Ces efficacités décroissent en loi de puissance avec la fréquence donc deviennent rapidement négligeables aux courtes longueurs d'onde. Cette technologie est à ce jour à l'état de preuve de concept expérimental par quelques gros laboratoires lasers à la pointe mondiale du domaine. Elle n'est pas encore utilisée à des fins industrielles.

La technique du miroir volant relativiste existe uniquement en tant que concept théorique. Elle consiste à focaliser un premier laser infrarouge très intense dans un gaz - (Bulanov 2003) - ou sur une feuille mince solide - (Tamburini 2014) - de quelques dizaines de nm d'épaisseur pour générer un miroir plasma relativiste. Un second laser contra-propagatif est alors focalisé sur le miroir généré par la première impulsion pour être comprimé temporellement et raccourci en longueur d'onde par effet Doppler. Par exemple, dans le cas d'une feuille mince, un premier laser très intense (multi-PW) est focalisé (I>$10^{23}$W/cm$^2$) d'un côté de la feuille pour accélérer les ions et électrons de la feuille par pression de radiation et créer un miroir relativiste. Un second laser contra-propagatif au miroir est envoyé de l'autre côté de la feuille. Le laser réfléchi par la feuille est alors comprimé temporellement et converti par effet Doppler vers l'UV/EUV. Contrairement à la génération d'harmoniques sur miroir plasma relativiste, cette technique devrait permettre la génération d'impulsions femtosecondes ou attosecondes isolées. Malheureusement, les efficacités de conversion et les longueurs d'onde UV/EUV minimales accessibles restent très limitées. Dans (Tamburini 2014), les auteurs mentionnent une longueur d'onde minimale de l'ordre de 570nm à partir d'un laser à 800nm avec des taux de conversion (infrarouge vers 570nm) inférieurs à 1%. Une des limitations principales des techniques proposées est qu'elles ne permettent pas d'avoir, dans des conditions réalistes, un miroir de qualité optique suffisante (densité, surface) pour pouvoir réfléchir convenablement la deuxième impulsion. Par ailleurs, ces techniques sont extrêmement complexes à mettre en place expérimentalement car elles requièrent la synchronisation spatio-temporelle sur des échelles temporelles femtosecondes et spatiales micrométriques de deux impulsions laser de haute puissance ultrabrèves, le tout pour des efficacités faibles, même dans le cas idéal. Il est donc peu vraisemblable que cette technique puisse être mise en œuvre à des fins industrielles.

L'invention vise à surmonter, en tout ou en partie, les inconvénients précités de l'art antérieur. Plus particulièrement elle vise à générer des impulsions électromagnétiques isolées cohérentes et ultrabrèves, dont le spectre peut s'étendre en tout ou en partie dans les domaines DUV, EUV voire X et présentant une énergie supérieure ou égale à 1 mJ. Aucune technique de l'art antérieur ne permet d'obtenir un tel résultat. Par ailleurs, l'invention vise à générer ces impulsions d'une manière relativement simple à mettre en œuvre, convenant de ce fait à des applications industrielles.

Conformément à l'invention, ce but est obtenu en utilisant une première impulsion laser intense (« impulsion génératrice ») pour générer un miroir plasma relativiste oscillant, sur lequel se réfléchit une deuxième impulsion laser (« impulsion source »). L'impulsion source présente une durée (pleine largeur à mi-hauteur) inférieure ou égale à la période optique de l'impulsion génératrice, et de préférence inférieure à la moitié de cette période optique. Etant donné que le miroir plasma relativiste oscille à la fréquence de la première impulsion, l'impulsion source ne voit pas un miroir oscillant, mais un miroir se déplaçant de manière monotone, à une vitesse relativiste (ou, tout au plus, accomplissant un seul mouvement de va-et-vient). En choisissant de manière opportune le décalage temporel entre la première et la deuxième impulsion, l'impulsion source sera réfléchie par le miroir plasma lorsque ce dernier se déplace à vitesse quasi-constante, et relativiste, dans une direction opposée à la propagation de cette impulsion. L'impulsion source subit alors une diminution de sa longueur d'onde (« décalage vers le bleu ») par effet Doppler et une forte compression temporelle.

La technique de l'invention est beaucoup plus facile à mettre en œuvre que celle du miroir volant relativiste, car elle ne requiert pas que les deux impulsions soient contre-propagatives. Au contraire, il est préférable qu'elles se propagent de manière coaxiale, ce qui simplifie grandement le montage optique. Par ailleurs, les deux impulsions peuvent être issues d'une même impulsion laser initiale, ce qui assure leur synchronisation. En outre, la qualité optique du miroir plasma ainsi obtenu est largement meilleure que celle d'un miroir volant relativiste.

Par rapport à la technique du miroir plasma relativiste, dans laquelle une seule impulsion laser génère le plasma et en est réfléchie, l'invention permet d'obtenir une efficience de conversion vers le DUV/EUV bien meilleure. En effet, l'invention permet en principe de convertir la quasi-totalité de l'énergie de l'impulsion source vers des courtes longueurs d'onde, alors que dans le cas de l'art antérieur seule une petite fraction de cette énergie est convertie. En fait, dans certains cas l'invention permet d'atteindre un rendement de conversion supérieur à 1 (rapportée à l'énergie de l'impulsion source), car l'impulsion source acquiert de l'énergie du miroir plasma au moment de sa réflexion.

En outre, l'invention permet d'obtenir des impulsions ultrabrèves (jusqu'à des durées de quelques dizaines d'attosecondes) uniques, alors que la technique du miroir plasma relativiste génère des trains de telles impulsions. A ce jour, d'autres techniques, telle la génération d'harmoniques d'ordre (HHG) élevé dans les gaz permettent de générer des impulsions attosecondes isolées, mais avec des énergies et des rendements de conversion très faibles (nanoJoules, rendements de l'ordre de $10^{-6}$ pour l'HHG).

Comme cela sera expliqué plus en détail dans la suite, l'invention peut déjà être mise en œuvre à l'aide de technologies existantes et éprouvées.

Un objet de l'invention est donc un procédé de génération d'impulsions électromagnétiques ultrabrèves isolées comprenant les étapes suivantes :

- diriger sur une surface d'une cible à l'état condensé une première impulsion laser en incidence oblique et en polarisation p, ladite première impulsion laser présentant une première longueur d'onde, correspondant à une première période optique, et une amplitude crête normalisée supérieure ou égale à 1, moyennant quoi un miroir plasma oscillant à vitesse relativiste est généré à la surface de la cible; et
- diriger sur ladite surface de la cible, en correspondance dudit miroir plasma, une deuxième impulsion laser présentant une deuxième longueur d'onde, inférieure à la première longueur d'onde, et une durée inférieure ou égale à la première période optique, la deuxième impulsion laser étant spatialement et temporellement superposée à la première impulsion laser ;

moyennant quoi la deuxième impulsion laser, réfléchie par le miroir plasma, subit un décalage de sa longueur d'onde et une modification de sa durée.

Un autre objet de l'invention est un appareil de génération d'impulsions électromagnétiques ultrabrèves isolées comprenant :

- un système laser configuré pour générer une première impulsion laser présentant une première longueur d'onde correspondant à une première période optique et une deuxième impulsion laser présentant une deuxième longueur d'onde, inférieure à la première longueur d'onde, et une durée inférieure ou égale à la première période optique ;
- un système optique configuré pour :

  - diriger sur une surface d'une cible à l'état condensé la première impulsion laser, en incidence oblique et présentant une polarisation de type p ;
  - diriger sur ladite surface de la cible la deuxième impulsion laser, de telle sorte qu'elle soit spatialement et temporellement superposée à la première impulsion laser ;

le système laser et le système optique étant aussi configuré de telle sorte que la première impulsion laser présente, sur la surface de la cible, une amplitude de pic normalisée supérieure ou égale à 1.

D'autres caractéristiques, détails et avantages de l'invention ressortiront à la lecture de la description faite en référence aux dessins annexés donnés à titre d'exemple et qui représentent, respectivement :

[Fig.1], un schéma de principe d'un procédé selon un mode de réalisation de l'invention ;

[Fig. 2], la première et la deuxième impulsion laser et les principaux paramètres caractérisant ces impulsions ;

[Fig. 3A], un graphique de la deuxième impulsion laser positionnée par rapport à un cycle optique de la première impulsion laser ;

[Fig. 3B], les spectres de la première et de la deuxième impulsion laser ;

[Fig. 3C], obtenue à partir d'une simulation simplifiée, un graphique de la deuxième impulsion laser positionnée par rapport à un cycle optique de la première impulsion laser après réflexion par le miroir plasma ;

[Fig. 3D], les spectres des impulsions de la [Fig. 3C] ;

[Fig. 4A], obtenue à partir d'une simulation premiers principes, un graphique d'une deuxième impulsion laser avant et après réflexion par un miroir plasma ;

[Fig. 4B], les spectres des impulsions de la [Fig. 4A] ; et

[Fig. 5], le schéma de principe d'un appareil selon un mode de réalisation de l'invention.

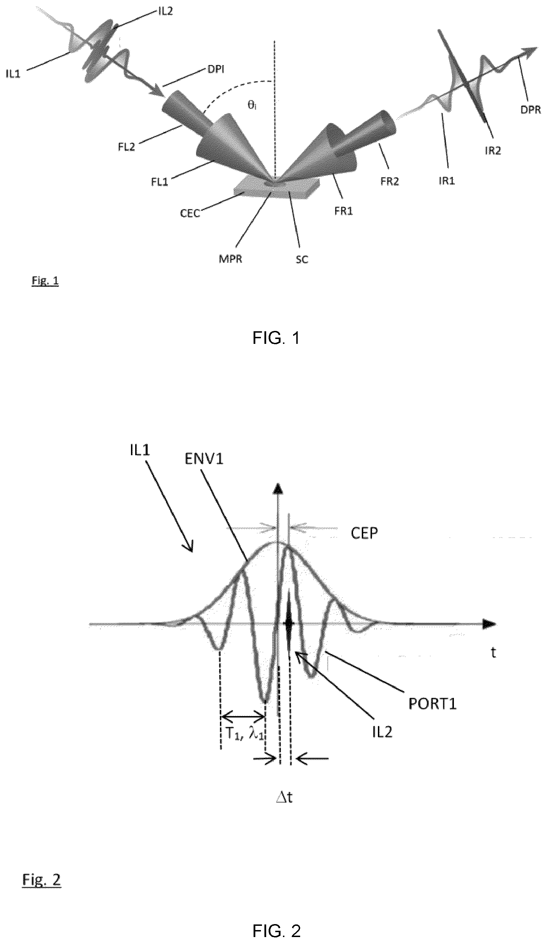

La [Fig. 1] et la [Fig. 2] illustrent le principe à la base de l'invention.

Un premier faisceau laser **FL1** portant une impulsion laser génératrice **IL1** et un deuxième faisceau laser FL2 portant une impulsion source IL2 se propagent selon une direction de propagation commune **DPI** formant un angle $\theta_i$ - strictement inférieur à 90° - avec la normale à la surface SC d'une cible CEC solide (plus généralement à l'état condensé, l'utilisation d'une cible liquide étant également possible). La nature chimique de la cible a une importance secondaire, car elle est uniquement destinée à générer un plasma hors équilibre dans lequel le mouvement des ions peut être ignoré en première approximation et seul celui des électrons est réellement important.

L'impulsion laser génératrice IL1 présente une longueur d'onde $\lambda_1$ (et donc une période optique $T_1$) qui est typiquement dans le domaine infrarouge.

Le faisceau laser FL1 est focalisé sur la cible à une intensité suffisante pour générer un miroir plasma relativiste. Typiquement, cela est satisfait pour une amplitude crête normalisée $a_1$ de l'impulsion supérieure ou égale à 1, l'amplitude normalisée étant définie par

$$a_1 = \frac{eE_L}{m_e \omega_1 c}$$

où $e$ et $m_e$ sont la charge et la masse de l'électron, respectivement, $E_L$ l'amplitude crête de l'impulsion (exprimée en V/m), $\omega_1$ la fréquence angulaire du laser et c la vitesse de la lumière. Pour une longueur d'onde $\lambda_1 = 3\,\mu m$, $a_1 = 1$ correspond à une intensité d'environ $1,5 \cdot 10^{17}$ W/cm$^2$.

L'impulsion laser IL1 présentant une polarisation de type p, la composante du champ électrique perpendiculaire à la surface met en oscillation les électrons du plasma avec une période $T_1$ et avec une vitesse crête relativiste. Pourvu que la densité électronique $n_e$ du plasma soit telle que la fréquence plasma $\omega_p = \sqrt{\frac{n_e e^2}{m \varepsilon_0}}$ ($\varepsilon_0$ étant la permittivité électrique du vide) soit supérieure à celle - $\omega_2$ - de l'impulsion source IL2, l'on obtient ainsi un miroir plasma relativiste MPR sur lequel se réfléchit ladite impulsion source IL2. Cette condition est satisfaite pour des impulsions sources IL2 dans le proche infrarouge ou le visible (voire dans le proche ou moyen ultraviolet) dès lors que la cible est à l'état condensé (solide ou liquide) et que l'amplitude du champ de l'impulsion IL1 est suffisamment élevée.

Pour que la composante du champ électrique de IL1 perpendiculaire à la surface de la cible présente une amplitude suffisante, l'angle d'incidence $\theta_i$ doit préférentiellement être supérieur ou égal à 25°. En outre, il est préférable que $\theta_i$ ne dépasse pas 75° pour éviter que la tache focale soit trop étalée sur la cible réduisant l'amplitude du champ électrique.

L'impulsion source IL2 présente une durée $\tau_2$ (définie à mi-hauteur en intensité - FWHM de l'anglais « Full Width at Half Maximum) qui est inférieure à la période optique $T_1$ de l'impulsion génératrice (ce qui entraine, nécessairement, que la longueur d'onde $\lambda_2$ et la période optique $T_2$ de l'impulsion source sont inférieures à $\lambda_1$ et à $T_1$ respectivement). De préférence, la durée $\tau_2$ est inférieure ou égale à $T_1/2$ (et par conséquent $\lambda_2 < \lambda_1/2$). Si le retard $\Delta t$ entre les deux impulsions (plus précisément, le retard entre les pics de leurs enveloppes) et la phase CEP de la porteuse PORT1 de l'impulsion génératrice IL1 relative à son enveloppe ENV1 (en anglais « Carrier - Envelope Phase ») sont choisis de manière opportune, l'impulsion source IL2 « voit » un miroir plasma ayant une composante de vitesse, approximativement constante, dans la direction opposée à sa direction de propagation DPI.

Selon un mode de réalisation préféré de l'invention, $\Delta t$ et CEP sont choisis de telle sorte que le miroir plasma s'éloigne de la surface (se dirige vers le vide) pendant toute la durée de l'impulsion source. Par conséquent, l'impulsion IR2 obtenue par réflexion de l'impulsion source subira un décalage « vers le bleu » (c'est-à-dire vers les petites longueurs d'onde) et une compression temporelle, et dans certains cas une amplification par transfert d'énergie depuis l'impulsion génératrice via le miroir plasma. L'impulsion génératrice aussi sera réfléchie par le miroir plasma MPR ; elle subira un élargissement spectral et une déformation de son profil temporel (sur la [Fig. 1] on désigne par IR1 l'impulsion génératrice réfléchie). Les deux impulsions réfléchies IR1 et IR2 se propagent le long d'une même direction de propagation DPR et sont superposées spatialement et temporellement ; cependant, leurs spectres sont suffisamment différents pour qu'il soit possible de les séparer, par filtrage ou en exploitant le fait que IR2 diverge davantage que IR1 en raison de sa plus grande longueur d'onde (comme cela sera expliqué plus loin, il est également possible d'utiliser une impulsion génératrice et une impulsion source ayant des polarisations orthogonales, ce qui permet aussi de séparer les impulsions IR1 et IR2 au moyen d'un polariseur).

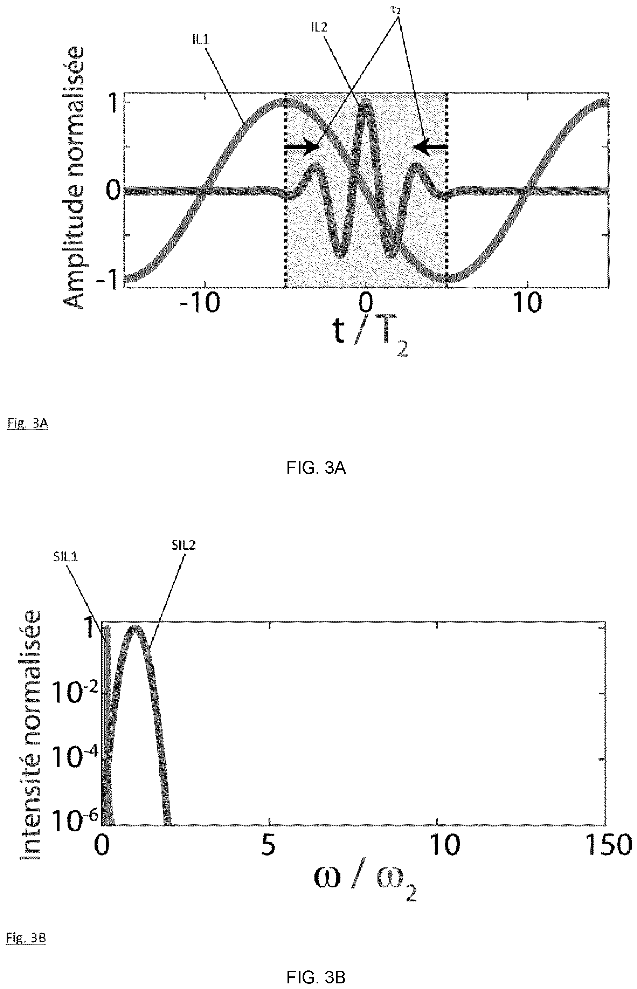

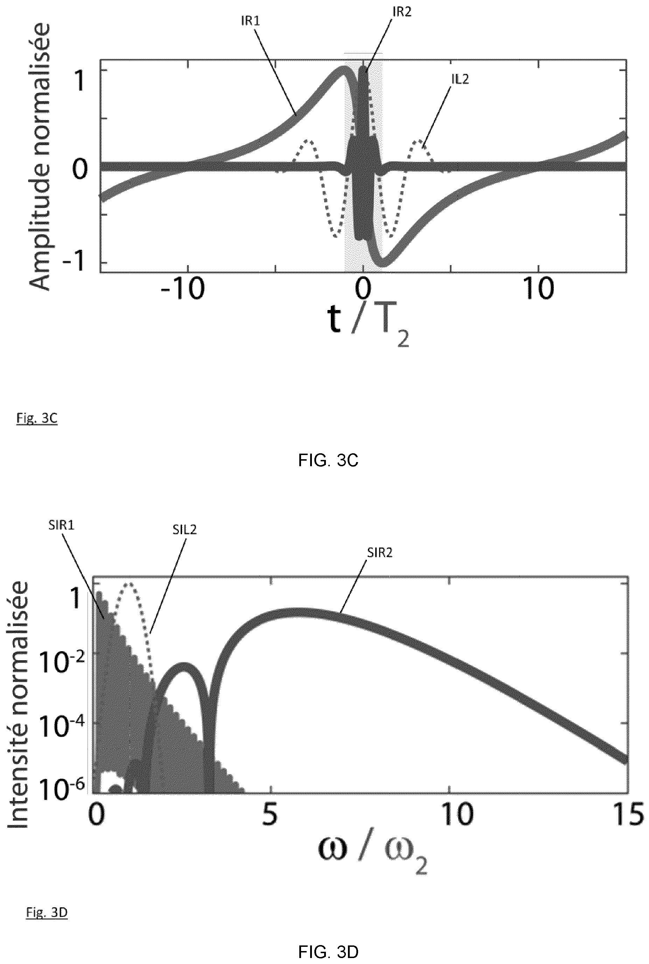

La [Fig. 3A] est un graphique idéalisé du champ électrique de l'impulsion source IL2 et de 1,5 cycle optique de l'impulsion IL1. L'impulsion source IL2 est une impulsion d'un seul cycle optique ($\tau_2 = T_2$) et sa longueur d'onde $\lambda_2$ est plus petite que $\lambda_1$ d'un facteur 6. La [Fig. 3B] est un graphique des spectres SIL2, SIL1 de ces deux impulsions. La [Fig. 3C] est un graphique idéalisé du champ électrique des impulsions réfléchies IR1 (sur une fraction de sa durée) et IR2. La [Fig. 3D] est un graphique des spectres SIR2, SIR1 de ces deux impulsions. La comparaison entre [Fig. 3A] et [Fig. 3C] montre la compression temporelle de l'impulsion source et celle entre [Fig. 3B] et [Fig. 3D] l'élargissement et le décalage « vers le bleu » de son spectre. Sur ces figures, les spectres sont représentés en fonction de la fréquence angulaire $\omega$ normalisée à $\omega_2$, fréquence angulaire de l'impulsion source.

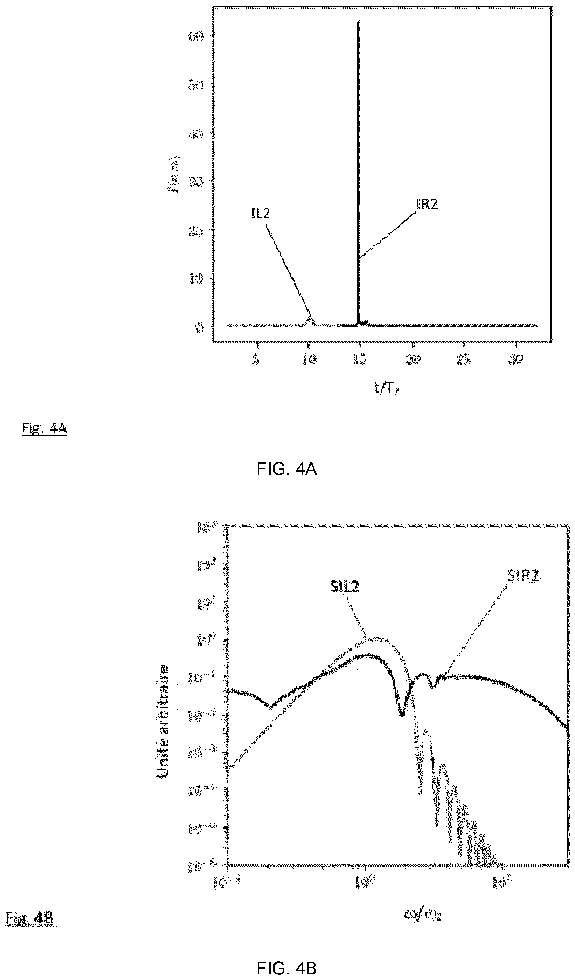

Alors que les figures précédentes ont été obtenues à l'aide d'un modèle simplifié (miroir parfaitement réfléchissant oscillant à la période de l'impulsion génératrice), les [Fig. 4A] et [Fig. 4B] illustrent les résultats d'une simulation cinétique premiers principes, de type « particule dans une cellule » (PIC - « Particle-In-Cell » en anglais) de la réflexion d'un laser proche infrarouge ($\lambda_2 = 1\,\mu m$) sur un miroir plasma relativiste accéléré par un laser dans l'infrarouge moyen ($\lambda_1 = 3\,\mu m$). L'amplitude laser normalisée vaut $a_1 = 7$ pour l'impulsion génératrice et $a_2 = 1$ pour l'impulsion source. Les simulations indiquent que l'impulsion source réfléchie par le miroir plasma, IR2, est compressée temporellement d'une durée initiale de 3,3fs (c'est à dire un cycle optique en FWHM en intensité) - courbe IL2 - à une durée de 80as (FWHM intensité). L'intensité de l'impulsion réfléchie est plus de 60 fois supérieure à celle de l'impulsion source incidente et contient 2,6 fois plus d'énergie qu'elle, cette énergie additionnelle étant transférée depuis l'impulsion génératrice via le mouvement du miroir plasma relativiste. Le spectre de l'impulsion réfléchie, SIR2, est très élargi spectralement par rapport à celui - SIL2 - de l'impulsion initiale et s'étale de quelques nanomètres (rayons X) à $1\mu m$. Il est plat sur une bonne partie de la gamme spectrale, donnant des efficacités de génération très élevées. Environ 30% de l'énergie initiale est en dessous de 100nm, c'est-à-dire dans les régions spectrales EUV et X.

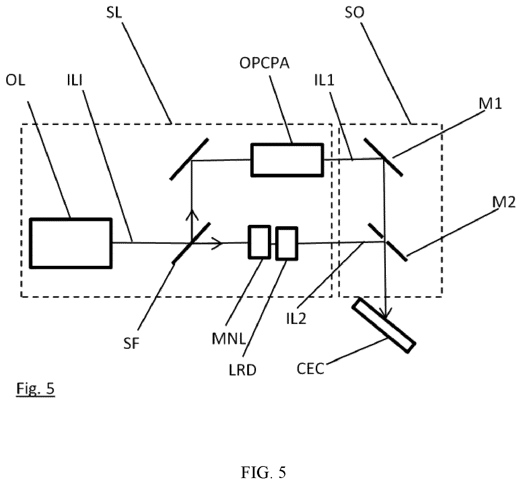

La [Fig. 5] illustre un appareil de génération d'impulsions électromagnétiques ultrabrèves isolées selon un mode de réalisation de l'invention. Cet appareil se compose principalement d'un système laser SL pour générer les impulsions génératrices IL1 et sources IL2 et d'un système optique SO pour diriger ces impulsions sur une cible à état condensé CEC.

Le système laser SL comprend un oscillateur laser OL qui délivre des impulsions laser dites initiales ILI, typiquement de durée femtoseconde ou picosecondes, généralement dans l'infrarouge proche ou moyen. Un séparateur de faisceau SF sépare ces impulsions en deux composantes. Il est avantageux que l'oscillateur laser présente une phase de la porteuse par rapport à l'enveloppe (CEP) stabilisée, ce qui peut être obtenu par des techniques connues de l'art antérieur. En effet, l'impulsion source se réfléchit sur le miroir plasma pendant une fraction déterminée du cycle optique de l'impulsion génératrice. Il est donc très important que la position du champ sous l'enveloppe de l'impulsion génératrice soit identique à chaque tir. Ce paramètre est donné par la CEP de l'impulsion génératrice, qui à son tour dépend de celle de l'impulsion initiale. À noter que la CEP de l'impulsion source n'est pas, en soi, un paramètre important à contrôler.

Une première composante de chaque impulsion est convertie vers de plus grandes longueurs d'onde et amplifiée par un dispositif amplificateur tel qu'un amplificateur paramétrique optique à impulsions étirées (OPCPA, de l'anglais « Optical Parametric Chirped Pulse Amplification ») pour former une impulsion génératrice IL1 ; à titre d'exemple (von Grafenstein 2020) décrit un OPCPA opérant dans le moyen infrarouge et pouvant convenir à la mise en œuvre de l'invention. Une deuxième composante, destinée à former une impulsion source IL2 subit un élargissement spectral par propagation dans un milieu non linéaire MNL suivi par une compression optique dans une ligne à retard dispersive LRD - voir par exemple (Nisoli 1998) - de manière à réduire sa durée à peu de cycles optiques, voire idéalement à un seul cycle optique. La ligne à retard dispersive LRD permet également d'ajuster le retard $\Delta t$ entre l'impulsion génératrice et l'impulsion source (en variante, une ligne à retard séparée peut être utilisée).

La génération des impulsions génératrices et sources à partir d'un même oscillateur laser est une caractéristique préférentielle de l'invention, même si elle n'est pas essentielle. En effet, le retard $\Delta t$ entre les deux impulsions doit être contrôlé avec une précision de l'ordre d'une fraction de $T_2$, c'est-à-dire de quelques femtosecondes ou moins. Cela peut être obtenu sans difficulté particulière à l'aide d'une ligne à retard classique, mais il serait beaucoup plus difficile de synchroniser deux sources lasers distinctes avec une telle précision.

Le système optique SO recombine les impulsions IL1 et IL2 de manière à les rendre colinéaires et à les focaliser sur ou à proximité de la cible. Dans sa forme la plus simple il peut comprendre deux miroirs concaves, M1 et M2, dont un (M2) est percé en son centre.

En général, l'impulsion génératrice devra être fortement focalisée - idéalement proche de la limite de diffraction - pour lui permettre d'atteindre des intensités relativistes. Par contre, il n'est pas nécessaire de focaliser fortement l'impulsion source : au contraire, il est préférable de ne pas le faire pour éviter qu'elle perturbe la dynamique du miroir plasma, qui idéalement devrait être contrôlée exclusivement par l'impulsion génératrice. En outre, plus la tâche formée par le faisceau IL2 sur le miroir plasma est grande - sans dépasser les dimensions du miroir lui-même, qui est définie par la tache formée par le faisceau **IL1** sur la cible - plus grand sera le « waist » de l'impulsion réfléchie IR2 et plus elle sera collimatée, ce qui permettra sa focalisation efficace.

Le système laser peut être plus complexe que celui représenté sur la [Fig. 1]. Par exemple, il peut également comprendre un dispositif de contrôle de la polarisation de l'impulsion source, tel qu'une lame biréfringente ou une suite de telles lames. En effet, la polarisation de l'impulsion source a peu d'influence sur l'efficacité de conversion et elle se transmet à l'impulsion réfléchie. Cela permet, par exemple, d'obtenir une impulsion EUV de polarisation arbitraire (e.g. elliptique ou circulaire) en changeant simplement la polarisation de l'impulsion source, ce qui est très difficile, voire impossible, avec les techniques connues de l'art antérieur utilisant un seul faisceau générateur (et pour lesquelles l'efficacité de génération vers l'EUV/X dépend fortement de la polarisation de ce faisceau). En outre, il peut être utile de tourner le plan de polarisation de l'impulsion source pour qu'elle se trouve, sur la cible, en polarisation « s ». Cela permet d'éviter une composante du champ électrique de l'impulsion source normal à la cible et de minimiser ainsi l'impact de cette même impulsion sur la dynamique du miroir plasma.

Le système laser peut également comprendre un système de mise en forme temporelle (« Pulse Shaping » en anglais) de l'impulsion source - par exemple, un modulateur acousto-optique - afin de contrôler la forme temporelle de l'impulsion EUV. Comme pour la polarisation, la forme temporelle de l'impulsion source n'a pas d'influence sur l'efficacité de conversion et se transmet donc à l'impulsion réfléchie. La mise en forme temporelle d'impulsions EUV est très difficile, voire impossible, à obtenir avec les techniques connues de l'art antérieur.

Selon un mode de réalisation préféré de l'invention, l'oscillateur laser OL peut être un laser Ytterbium, qui délivre des impulsions de très hautes énergies (de quelques centaines de mJ à quelques J) et de durées typiques de l'ordre de quelques centaines de fs à quelques dizaines de ps avec une longueur d'onde de 2,5 $\mu$m. La plus grande partie de cette énergie, typiquement environ 90%, est dirigée vers un OPCPA - tel que celui décrit dans (von Grafenstein 2020) précité - qui convertit les impulsions dans la plage de longueur d'onde de 3 à 10 $\mu$m (infrarouge moyen). Avec un taux de conversion pouvant atteindre 6-7%, on peut s'attendre à obtenir des impulsions dans l'infrarouge moyen de quelques dizaines à quelques centaines de mJ et de quelques cycles optiques, avec des durées typiquement de l'ordre de dizaines à quelques centaines de cycles optiques. Ces impulsions sont suffisamment intenses pour pouvoir générer des miroirs plasmas relativistes. L'autre partie de l'énergie du laser Ytterbium, typiquement environ 10%, est compressée dans un milieu non-linéaire tel qu'une cellule de gaz, une fibre creuse ou une plaque mince afin d'obtenir une impulsion à 1 $\mu$m de 1 à 2 cycles optiques de quelques mJ à quelques centaines de mJ synchronisées avec l'impulsion dans l'infrarouge moyen. La réflexion par le miroir plasma généré par cette dernière impulsion convertit une grande partie de l'impulsion source à 1% dans l'UV/EUV sous la forme d'une impulsion attoseconde unique.

Plusieurs variantes de ce schéma sont envisageables.

Tout d'abord l'impulsion source peut être préalablement doublée en fréquence à 500nm (voire triplée, ou même quadruplée), puis être compressée à quelques cycles. Cela permet de ne pas avoir à générer une impulsion de 1-2 cycles optiques comme à 1 $\mu$m mais de 2-4 cycles optiques à 500nm.

Au lieu d'utiliser un laser Ytterbium, un laser Holmium à 2 $\mu$m pourrait par exemple être envisagé. Son avantage principal est que des impulsions dans l'infrarouge moyen peuvent en être dérivées avec un très haut taux de conversion (supérieur à 10%). L'impulsion source peut être compressée à 1 - 2 cycles optiques en gardant sa longueur d'onde centrale à 2 $\mu$m ou être préalablement doublé à 1 $\mu$m.

Selon un autre mode de réalisation, l'oscillateur laser OL peut être un oscillateur Ti:Sapphire émettant à 800 nm. Les lasers Ti:Sapphire sont ceux qui, à ce jour produisent les impulsions lumineuses les plus puissantes, atteignant plusieurs Petawatts (PW), avec des énergies de quelques centaines de J pour des durées de l'ordre de 10 fs. Comme dans le cas précédent, un OPCPA peut être utilisé pour générer une impulsion génératrice dans l'infrarouge moyen avec une efficacité de l'ordre de quelques pourcents. Ainsi, une impulsion initiale de 10J à 800nm peut par exemple être convertie en une impulsion génératrice de 100mJ à 10 $\mu$m. Parallèlement, une plus petite partie de l'énergie du 800nm (quelques dizaines ou centaines de mJ) peut être compressée à une durée de un à quelques cycles optiques. Ceci permet d'obtenir après réflexion sur le miroir plasma des impulsions EUV de quelques dizaines à quelques centaines de mJ.

Comme précédemment, les impulsions compressées peuvent être préalablement doublées en fréquences à 400nm, pour augmenter la différence de longueur d'onde entre l'impulsion génératrice et l'impulsion source.

Selon un autre mode de réalisation, l'impulsion à 800 nm de haute énergie (jusqu'à quelques kJ) générée par un laser Ti:Sapphire peut être directement utilisée comme impulsion génératrice. L'impulsion source peut être obtenue par conversion en fréquence vers l'harmonique d'ordre 3 ou 4 de l'impulsion initiale à 800 nm (soit 266 ou 200 nm), élargie spectralement puis compressée.

En plus de pouvoir atteindre des longueurs d'ondes DUV/EUV très courtes, la technique de l'invention permet en réalité de régler (ou « accorder ») très simplement la longueur d'onde de l'impulsion réfléchie en faisant varier l'amplitude et le signe de la vitesse du miroir à l'instant de la réflexion. Ces deux quantités physiques varient au cours d'un cycle optique de l'impulsion génératrice

A chaque cycle optique de l'impulsion génératrice, le miroir plasma est d'abord poussé vers la cible puis tiré vers le vide. Si l'impulsion source est réfléchie lorsque le miroir est tiré vers le vide (vitesse négative), elle sera décalée « vers le bleu ». Si l'impulsion source est réfléchie lorsque le miroir est poussé vers la cible, elle sera décalée « vers le rouge ». Plusieurs paramètres permettent de contrôler en pratique l'amplitude et le signe de la vitesse du miroir :

- Le retard entre l'impulsion génératrice et l'impulsion source. Ce délai permet de contrôler l'instant auquel l'impulsion source est réfléchie sur le miroir plasma, et donc l'amplitude et le signe de la vitesse du miroir à cet instant.

- La CEP de l'impulsion génératrice. Changer la CEP permet de changer l'instant auquel le miroir plasma est tiré vers le vide. Cela a un effet équivalent à changer le délai.

- L'amplitude de l'impulsion génératrice, qui peut être augmentée ou diminuée en agissant sur l'énergie de cette impulsion ou sur la taille de sa tâche focale. Augmenter l'amplitude du champ laser de l'impulsion génératrice augmente l'amplitude de la vitesse du miroir, et donc l'importance du décalage vers le bleu ou le rouge subi par l'impulsion source.

- Les impulsions source et génératrice peuvent ne pas se propager de manière collinéiare, mais leurs directions de propagation peuvent former un angle strictement inférieur à 180° - de préférence inférieur à 90° et de manière encore préférée non supérieur à 10° - pour séparer spatialement les impulsions après interaction.

Jusqu'ici, seul le cas où l'impulsion source est réfléchie pendant que le miroir plasma se déplace vers le vide (à l'écart de la cible), et subit donc un décalage vers le bleu et une compression temporelle, a été considéré. L'invention n'est cependant pas limitée à ce cas. Il est par exemple possible de régler le retard $\Delta t$ et/ou la CEP de telle sorte que l'impulsion source soit réfléchie pendant que le miroir plasma se déplace vers la cible. Il en résulte un décalage vers le rouge de l'impulsion réfléchie, jusqu'au domaine THz. Il sera en particulier possible d'obtenir des impulsions THz de durées inférieures au cycle optique. Plusieurs méthodes pour générer de telles impulsions THz existent, mais l'invention permet d'atteindre des énergies inégalées.

Par ailleurs, il est également possible de faire en sorte que le front montant de l'impulsion source soit réfléchi pendant que le miroir plasma s'éloigne de la cible et son front descendant lorsqu'il s'en rapproche, ou inversement. Dans ces conditions, l'impulsion source subit à la fois un décalage vers le bleu et un décalage vers le rouge. Il en résulte une impulsion réfléchie présentant un spectre extrêmement large, pouvant s'étaler sur un grand nombre d'octaves (par exemple de 20 nm à 20 $\mu$m, soit 10 octaves). De celles impulsions ne peuvent être générées par aucune technique connue de l'art antérieur.

Références bibliographiques :

(Vincenti 2019 ): H. Vincenti « Achieving Extreme Light Intensities using Optically Curved Relativistic Plasma Mirrors » Physical Review Letters 123, 105001 (2019).

(Bulanov 2003): S. V. Bulanov, T. Esirkepov et T. Tajima, « Light Intensification towards the Schwinger Limit » Phys. Rev. Lett., vol. 91, no. 8, p. 085001, Aug. 2003.

(Tamburini 2014): M. Tamburini, A. Di Piazza, T. V. Liseykina, and C. H. Keitel, « Plasma-Based Generation and Control of a Single Few-Cycle High-Energy Ultrahigh-Intensity Laser Pulse » Phys. Rev. Lett., vol. 113, no. 2, p. 025005, Jul. 2014.

(von Grefenstein 2020): L. von Grefenstein et al. «Multi-millijoule, few-cycle 5 $\mu$m OPCPA at 1 kHz repetition rate », Optics Letters, Vol. 45, No. 21, p. 5998, Nov. 2020

(Nisoli 1998): M. Nisoli et al. « Toward a Terawatt-Scale Sub-10-fs Laser Technology », IEEE Journal of Selected Topics in Quantum Electronics, Vol. 4, No. 2, p. 414, Mars - Avril 1998

**Revendications**

1. Procédé de génération d'impulsions électromagnétiques ultrabrèves isolées, de durée inférieure à 100 ps, (IR2) comprenant les étapes suivantes :

   - diriger sur une surface (SC) d'une cible à l'état condensé (CEC) une première impulsion laser (IL1) en incidence oblique et en polarisation p, ladite première impulsion laser présentant une première longueur d'onde ($\lambda_1$), correspondant à une première période optique (T1), et une amplitude crête normalisée supérieure ou égale à 1, moyennant quoi un miroir plasma oscillant à vitesse relativiste (MPR) est généré à la surface de la cible; et **caractérisé par** l'étape de :

   - diriger sur ladite surface de la cible, en correspondance dudit miroir plasma, une deuxième impulsion laser (IL2) présentant une deuxième longueur d'onde, inférieure à la première longueur d'onde, et une durée ($\tau_2$) inférieure ou égale à la première période optique (T1), la deuxième impulsion laser étant spatialement et temporellement superposée à la première impulsion laser ;

   moyennant quoi la deuxième impulsion laser, réfléchie par le miroir plasma, subit un décalage de sa longueur d'onde et une modification de sa durée.

2. Procédé selon la revendication 1 dans lequel la durée ($\tau_2$) de la deuxième impulsion laser (IL2) est inférieure ou égale à la moitié de la première période optique, le décalage temporel entre la première et la deuxième impulsion laser était choisi de telle sorte que, pendant toute la durée au cours de laquelle la deuxième impulsion laser est incidente sur le miroir plasma (MPR), ce dernier s'éloigne de la surface de la cible ; moyennant quoi la deuxième impulsion laser (IL2) subit un décalage vers le bleu de sa longueur d'onde et une compression temporelle par effet Doppler.

3. Procédé selon l'une des revendications précédentes dans lequel la deuxième impulsion laser (IL2) se propage selon une direction (DPI) colinéaire à une direction de propagation de la première impulsion laser.

4. Procédé selon l'une des revendications précédentes dans lequel la première impulsion laser (IL1) est incidente sur la surface de la cible avec un angle d'incidence ($\theta$i) compris entre 25° et 75°.

5. Procédé selon l'une des revendications précédentes dans lequel la deuxième impulsion laser (IL2) présente, sur la surface de la cible, une amplitude crête normalisée inférieure à celle de la première impulsion laser (IL1).

6. Procédé selon l'une des revendications précédentes dans lequel la deuxième impulsion laser (IL2) est incidente sur la surface de la cible en polarisation s.

7. Procédé selon l'une des revendications précédentes comprenant une étape de stabilisation de la phase (CEP) de la porteuse de la première impulsion laser (IL1) relative à son enveloppe.

8. Procédé selon l'une des revendications précédentes comprenant une étape de contrôle du décalage de la longueur d'onde de la deuxième impulsion laser réfléchie par le miroir plasma par ajustement d'au moins un paramètre choisi parmi : une phase (CEP) de la porteuse de la première impulsion laser relative à son enveloppe ; un retard ($\Delta t$) entre la première et la deuxième impulsion laser ; une amplitude crête de la première impulsion laser.

9. Procédé selon l'une des revendications précédentes comprenant une étape préalable de génération de la première et de la deuxième impulsion laser à partir d'une même impulsion laser dite initiale (ILI).

10. Procédé selon la revendication 9 dans lequel ladite impulsion laser initiale (ILI) est une impulsion dans l'infrarouge proche, ladite étape préalable comprenant :

- la conversion en longueur d'onde d'une fraction majoritaire de l'impulsion laser initiale vers l'infrarouge moyen par un amplificateur paramétrique optique (OPCPA) ; et
- l'élargissement spectral d'une fraction minoritaire de l'impulsion laser initiale par propagation dans un milieu optiquement non-linéaire (MNL) et sa compression temporelle par une ligne de retard dispersive (LRD).

11. Procédé selon l'une des revendications précédentes comprenant une étape préalable de mise en forme du profil temporel d'intensité et/ou de polarisation de la deuxième impulsion laser.

12. Appareil de génération d'impulsions électromagnétiques ultrabrèves isolées, de durée inférieure à 100 ps comprenant :

- un système laser (SL) configuré pour générer une première impulsion laser (IL1) présentant une première longueur d'onde ($\lambda_1$) correspondant à une première période optique (T1) et une deuxième impulsion laser (IL2) présentant une deuxième longueur d'onde, inférieure à la première longueur d'onde, et une durée inférieure ou égale à la première période optique ;
- un système optique configuré pour :

- diriger sur une surface (SC) d'une cible à l'état condensé (CEC) la première impulsion laser (IL1), en incidence oblique et présentant une polarisation de type p ;
- diriger sur ladite surface de la cible la deuxième impulsion laser (IL2), de telle sorte qu'elle soit spatialement et temporellement superposée à la première impulsion laser ;

le système laser et le système optique étant aussi configuré de telle sorte que la première impulsion laser présente, sur la surface de la cible, une amplitude de pic normalisée supérieure ou égale à 1.

**Patentansprüche**

1. Verfahren zur Erzeugung isolierter ultrakurzer elektromagnetischer Impulse von einer Dauer von weniger als 100 ps (IR2), umfassend die folgenden Schritte:

- Richten eines ersten Laserimpulses (IL1) mit schrägem Einfall und Polarisation p auf eine Oberfläche (SC) eines Ziels im kondensierten Zustand (CEC), wobei der erste Laserimpuls eine erste Wellenlänge ($\lambda_1$), die einer ersten optischen Periode (T1) entspricht, und eine normalisierte Spitzenamplitude größer als oder gleich 1 aufweist, wodurch auf der Oberfläche des Ziels ein Plasmaspiegel erzeugt wird, der bei relativistischer Geschwindigkeit oszilliert (MPR); und **gekennzeichnet durch** den Schritt des:

- Richtens eines zweiten Laserimpulses (IL2), in Übereinstimmung mit dem Plasmaspiegel, der eine zweite Wellenlänge, die weniger beträgt als die erste Wellenlänge, und eine Dauer ($\tau_2$) aufweist, die weniger beträgt als die oder gleich der ersten optischen Periode (T1) ist, auf die Oberfläche des Ziels, wobei der zweite Laserimpuls dem ersten Laserimpuls räumlich und zeitlich überlagert ist;

wodurch der zweite Laserimpuls, reflektiert durch den Plasmaspiegel, eine Verschiebung seiner Wellenlänge und eine Modifikation seiner Dauer durchläuft.

2. Verfahren nach Anspruch 1, wobei die Dauer ($\tau_2$) des zweiten Laserimpulses (IL2) weniger beträgt als die oder gleich der Hälfte der ersten optischen Periode, ist wobei die zeitliche Verschiebung zwischen dem ersten und dem zweiten Laserimpuls derart gewählt wird, dass während der gesamten Dauer, im Laufe deren der zweite Laserimpuls auf den Plasmaspiegel (MPR) einfällt, letzterer sich von der Oberfläche des Ziels entfernt; wodurch der zweite Laserimpuls (IL2) eine Verschiebung seiner Wellenlänge in Richtung blau und eine zeitliche Kompression durch den Dopplereffekt durchläuft.

3. Verfahren nach einem der vorstehenden Ansprüche, wobei sich der zweite Laserimpuls (IL2) gemäß einer Richtung (DPI) ausbreitet, die mit einer Ausbreitungsrichtung des ersten Laserimpulses kollinear ist.

4. Verfahren nach einem der vorstehenden Ansprüche, wobei der erste Laserimpuls (IL1) auf die Oberfläche des Ziels mit einem Einfallswinkel ($\theta i$) zwischen 25° und 75° einfällt.

5. Verfahren nach einem der vorstehenden Ansprüche, wobei der zweite Laserimpuls (IL2) auf der Oberfläche des Ziels eine normalisierte Spitzenamplitude von weniger als jener des ersten Laserimpulses (IL1) aufweist.

6. Verfahren nach einem der vorstehenden Ansprüche, wobei der zweite Laserimpuls (IL2) auf die Oberfläche des Ziels mit einer Polarisation s einfällt.

7. Verfahren nach einem der vorstehenden Ansprüche, umfassend einen Schritt der Stabilisierung der Phase (CEP) der Trägerwelle des ersten Laserimpulses (IL1) in Bezug auf seine Hüllkurve.

8. Verfahren nach einem der vorstehenden Ansprüche, umfassend einen Schritt der Steuerung der Verschiebung der Wellenlänge des zweiten Laserimpulses, der durch den Plasmaspiegel reflektiert wird, durch Anpassung von mindestens einem Parameter, ausgewählt aus: einer Phase (CEP) der Trägerwelle des ersten Laserimpulses in Bezug auf seine Hüllkurve; einer Verzögerung ($\Delta t$) zwischen dem ersten und dem zweiten Laserimpuls; einer Spitzenamplitude des ersten Laserimpulses.

9. Verfahren nach einem der vorstehenden Ansprüche, umfassend einen vorherigen Schritt der Erzeugung des ersten und des zweiten Laserimpulses ausgehend von einem gleichen sogenannten Anfangslaserimpuls (ILI).

10. Verfahren nach Anspruch 9, wobei der Anfangslaserimpuls (ILI) ein Impuls im nahen Infrarot ist, wobei der vorherige Schritt Folgendes umfasst:

   - die Umwandlung der Wellenlänge eines Hauptanteils des Anfangslaserimpulses in Richtung mittleres Infrarot durch einen parametrischen optischen Verstärker (OPCPA); und
   - die spektrale Erweiterung eines geringen Anteils des Anfangslaserimpulses durch Ausbreitung in einem optisch nicht linearen Medium (MNL) und seine zeitliche Kompression durch eine dispersive Verzögerungsleitung (LRD).

11. Verfahren nach einem der vorstehenden Ansprüche, umfassend einen vorherigen Schritt der Formatierung des zeitlichen Intensitätsprofils und/oder der Polarisation des zweiten Laserimpulses.

12. Einrichtung zur Erzeugung isolierter ultrakurzer elektromagnetischer Impulse von einer Dauer von weniger als 100 ps, umfassend:

   - ein Lasersystem (SL), konfiguriert zum Erzeugen eines ersten Laserimpulses (IL1), der eine erste Wellenlänge ($\lambda_1$) aufweist, die einer ersten optischen Periode (T1) entspricht, und eines zweiten Laserimpulses (IL2), der eine zweite Wellenlänge, die weniger beträgt als die erste Wellenlänge, und eine Dauer aufweist, die weniger beträgt als die oder gleich der ersten optischen Periode ist;
   - ein optisches System, konfiguriert zum:

      - Richten des ersten Laserimpulses (IL1) mit schrägem Einfall und eine Polarisation vom Typ p aufweisend auf eine Oberfläche (SC) eines Ziels im kondensierten Zustand (CEC);
      - Richten des zweiten Laserimpulses (IL2) auf die Oberfläche des Ziels derart, dass er dem ersten Laserimpuls räumlich und zeitlich überlagert ist;

   wobei das Lasersystem und das optische System auch derart konfiguriert sind, dass der erste Laserimpuls auf der Oberfläche des Ziels eine normalisierte Peakamplitude von größer als oder gleich 1 aufweist.

## Claims

1. Method for generating isolated ultra-short electromagnetic pulses, of duration less than 100 ps, (IR2) comprising the following steps:

- directing onto the surface (SC) of a target in the condensed state (CEC) a first laser pulse (IL1) at oblique incidence and with polarisation p, said first laser pulse having a first wavelength ($\lambda_1$), corresponding to a first optical period (T1), and a normalised peak amplitude greater than or equal to 1, resulting in a plasma mirror oscillating at relativistic speed (MPR) is generated on the surface of the target; and **characterised by** the step of:

- directing onto said surface of the target, coincident with said plasma mirror, a second laser pulse (IL2) having a second wavelength, less than the first wavelength, and a duration ($\tau_2$) less than or equal to the first optical period (T1), the second laser pulse being spatially and temporally superimposed onto the first laser pulse;

resulting in the second laser pulse, reflected by the plasma mirror, experiencing a shift in its wavelength and a modification of its duration.

2. Method according to claim 1, wherein the duration ($\tau_2$) of the second laser pulse (IL2) is less than or equal to half of the first optical period, the time shift between the first and the second laser pulse being chosen, such that, for the entire duration during which the second laser pulse is incident on the plasma mirror (MPR), the latter moves away from the surface of the target; resulting in the second laser pulse (IL2) experiencing a shift towards the blue of its wavelength and a time compression by Doppler effect.

3. Method according to any one of the preceding claims, wherein the second laser pulse (IL2) is propagated along a direction (DPI) colinear to a propagation direction of the first laser pulse.

4. Method according to any one of the preceding claims, wherein the first laser pulse (IL1) is incident on the surface of the target with an angle of incidence ($\theta i$) of between 25° and 75°.

5. Method according to any one of the preceding claims, wherein the second laser pulse (IL2) has, on the surface of the target, a normalised peak amplitude less than that of the first laser pulse (IL1).

6. Method according to any one of the preceding claims, wherein the second laser pulse (IL2) is incident on the surface of the target with polarisation s.

7. Method according to any one of the preceding claims, comprising a step of stabilising the phase (CEP) of the carrier of the first laser pulse (IL2) relative to its envelope.

8. Method according to any one of the preceding claims, comprising a step of controlling the shift of the wavelength of the second laser pulse reflected by the plasma mirror by adjustment of at least one parameter chosen from among: a phase (CEP) of the carrier of the first laser pulse relative to its envelope; a delay ($\Delta t$) between the first and the second laser pulse; a peak amplitude of the first laser pulse.

9. Method according to any one of the preceding claims, comprising a prior step of generating the first and the second laser pulse from one same so-called initial laser pulse (ILI).

10. Method according to claim 9, wherein said initial laser pulse (ILI) is a pulse in the near infrared, said prior step comprising:

- the conversion into wavelength of a major fraction of the initial laser pulse to the mid-infrared by an optical parametric amplifier (OPCPA); and
- the spectral enlargement of a minor fraction of the initial laser pulse by propagation in an optically non-linear medium (MNL) and its time compression by a dispersive delay line (LRD).

11. Method according to any one of the preceding claims, comprising a prior step of shaping the intensity time profile and/or polarising the second laser pulse.

12. Device for generating isolated ultra-short electromagnetic pulses, of duration less than 100 ps, comprising:

- a laser system (SL) configured to generate a first laser pulse (IL1) having a first wavelength ($\lambda_1$) corresponding to a first optical period (T1) and a second laser pulse (IL2) having a second wavelength, less than the first wavelength, and a duration less than or equal to the first optical period;
- an optical system configured to:

- direct onto a surface (SC) of a target in the condensed state (CEC) the first laser pulse (IL1), at oblique incidence and with a polarisation of the type p;
- directing onto said surface of the target the second laser pulse (IL2), such that it is spatially and temporally superimposed onto the first laser pulse;

the laser system and the optical system also being configured such that the first laser pulse

**EP 4 453 650 B1**

has, on the surface of the target, a normalised peak amplitude greater than or equal to 1.

Fig. 1

FIG. 1

Fig. 2

FIG. 2

Fig. 3A

FIG. 3A

Fig. 3B

FIG. 3B

Fig. 3C

FIG. 3C

Fig. 3D

FIG. 3D

Fig. 4A

FIG. 4A

Fig. 4B

FIG. 4B

Fig. 5

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FREDERIK B\"OHLE et al.** *Generation of XUV spectral continua from relativistic plasma mirrors driven in the near-single-cycle limit*, 2020
- **H. VINCENTI**. Achieving Extreme Light Intensities using Optically Curved Relativistic Plasma Mirrors. *Physical Review Letters*, 2019, vol. 123, 105001
- **S. V. BULANOV** ; **T. ESIRKEPOV** ; **T. TAJIMA**. Light Intensification towards the Schwinger Limit. *Phys. Rev. Lett.*, August 2003, vol. 91 (8), 085001
- **M. TAMBURINI** ; **A. DI PIAZZA** ; **T. V. LISEYKINA** ; **C. H. KEITEL**. Plasma-Based Generation and Control of a Single Few-Cycle High-Energy Ultrahigh-Intensity Laser Pulse. *Phys. Rev. Lett.*, July 2014, vol. 113 (2), 025005
- **L. VON GREFENSTEIN et al.** Multi-millijoule, few-cycle 5 $\mu$m OPCPA at 1 kHz repetition rate. *Optics Letters*, November 2020, vol. 45 (21), 5998
- **M. NISOLI et al.** Toward a Terawatt-Scale Sub-10-fs Laser Technology. *IEEE Journal of Selected Topics in Quantum Electronics*, March 1998, vol. 4 (2), 414